# FASCICULE DE BREVET EUROPEEN

(11) **EP 3 189 652 B1**
(45) Date de publication et mention de la délivrance du brevet: **18.11.2020**
(21) Numéro de dépôt: 15767211.4
(22) Date de dépôt: 31.08.2015
(51) Int. Cl.: H04L 29/12

(54) **PROCÉDÉ D'ACHEMINEMENT DE DONNÉES ENTRE ÉQUIPEMENTS IP**
VERFAHREN ZUR WEITERLEITUNG VON DATEN ZWISCHEN IP-VORRICHTUNGEN
METHOD OF FORWARDING DATA BETWEEN IP DEVICES

(30) Priorité: 02.09.2014 FR 1458193
(43) Date de publication de la demande: 12.07.2017
(73) Titulaire: ORANGE, 75015 Paris (FR)
(72) Inventeur: FONTAINE, Fabrice, F-35850 Geveze (FR); MOULLEC, Flavien, 06600 Antibes (FR)
(86) Numéro de dépôt international: PCT/FR2015/052302
(87) Numéro de publication internationale: WO 2016/034799

(56) Documents cités:
- WO-A1-2004/064334
- US-A1- 2014 167 979
- SHELBY Z ET AL: "Neighbor Discovery Optimization for IPv6 over Low-Power Wireless Personal Area Networks (6LoWPANs); rfc6775.txt", NEIGHBOR DISCOVERY OPTIMIZATION FOR IPV6 OVER LOW-POWER WIRELESS PERSONAL AREA NETWORKS (6LOWPANS); RFC6775.TXT, INTERNET ENGINEERING TASK FORCE, IETF; STANDARD, INTERNET SOCIETY (ISOC) 4, RUE DES FALAISES CH- 1205 GENEVA, SWITZERLAND, 6 novembre 2012 (2012-11-06), pages 1-55, XP015086471,

## Description

L'invention se rapporte à un procédé d'acheminement de données entre équipements dont le fonctionnement est basé sur le protocole IP (sigle anglo-saxon de « Internet Protocole ») ci-après désignés par l'expression « équipement IP ».

Rappelons qu'un réseau domestique est un réseau informatique qui relie ensemble, avec ou sans fils, des équipements terminaux IP d'une maison (ordinateurs, décodeur de télévision numérique, périphériques d'impression, de stockage, etc.) aptes à communiquer ensemble. Un réseau domestique comporte un équipement routeur, aussi communément appelé passerelle domestique, ou plus simplement passerelle, élément intermédiaire assurant la redirection, ou routage, des paquets de données entre les différents terminaux et réseaux qui lui sont connectés.

Les équipements IP visés ci-dessus sont par exemple la passerelle domestique et le décodeur de télévision numérique.

Usuellement, dans un tel réseau, un terminal comporte une interface de type Ethernet permettant de dialoguer en mode filaire sur le réseau via un protocole de communication de type IP et une interface Wifi pour dialoguer sans fils selon ce même protocole IP.

Ces interfaces consomment beaucoup d'énergie.

Les réseaux domestiques actuels voient apparaître de plus en plus des réseaux de capteurs. Ces réseaux de capteurs IP sans-fil connaissent aujourd'hui un essor sans précèdent dans divers domaines tel que la production et l'exploitation électrique (Smart Grid), la télé-médecine, l'industrie automobile (véhicules intelligents), etc. Ceci est rendu possible grâce à l'émergence de divers standards technologiques dédiés aux communications dans des réseaux de capteurs. Les capteurs échangent des messages conformes à une norme dite « basse énergie » sur un canal radio. Au nombre de ces normes « basse énergie », on peut citer par exemple le protocole ZigBee (un protocole qui permet la communication, dans des réseaux locaux, sur un lien radio, avec une consommation réduite), la norme « DECT Ultra Low Energy » (en abrégé DECT ULE, une extension de la norme de communication sans fils DECT pour les applications à basse énergie) ou encore la norme « Bluetooth Low Energy » (en abrégé BLE, dont le but est de fournir une puissance réduite par rapport aux applications standard de la norme Bluetooth). Les réseaux supportant ces différentes normes consomment peu d'énergie. Dans la suite, on y fera référence sous l'appellation générique de « réseaux à basse consommation », ou encore 6LoWPAN, acronyme pour « IPv6 Low power Wireless Personal Area Networks ».

Les inventeurs ont constaté que, à l'heure actuelle, un équipement de type IP (par exemple IPv4 ou IPv6) qui n'implémente pas les normes 6LoWPAN, comme un décodeur TV numérique, ne peut pas rejoindre un réseau de capteurs 6LoWPAN dans le but de transmettre des données à un autre équipement IP via le réseau de capteurs.

La seule possibilité qu'offre les protocoles existants est de pouvoir connecter un équipement IP au « point de sortie » (ou Low power and lossy network Border Router / LBR en référence au protocole 6LoWPAN) du réseau 6LoWPAN. En conséquence, aujourd'hui, il n'est pas possible pour un équipement IP tel qu'un décodeur TV d'utiliser le réseau de capteurs pour acheminer ses données jusqu'à un second équipement tel qu'une passerelle domestique qui ferait office de « point de sortie ».

Ceci provient notamment du fait que la gestion des adresses IP s'effectue de façon indépendante dans chaque réseau. Un équipement IP, par exemple un décodeur, autre que celui qui est déclaré comme « point de sortie », qui sera dans notre exemple de réalisation une passerelle domestique, ne connaît pas l'adressage utilisé dans le réseau de capteurs ; d'autant plus que la topologie du réseau de capteurs évolue dans le temps.

L'invention vient améliorer la situation.

A cet effet, selon un aspect fonctionnel, l'invention a trait à un procédé d'acheminement de données tel que défini dans la revendication 1.

L'invention introduit donc un routeur qui a pour fonction de gérer l'adressage d'un équipement IP en coopération avec le réseau de capteurs et non indépendamment du réseau de capteurs comme dans l'état de la technique.

Le routeur en question est donc capable de générer pour un équipement IP une adresse conforme à l'adressage utilisé dans le réseau de capteurs.

L'équipement IP est donc vu par le nœud gestionnaire comme un capteur.

Grâce à l'invention, le premier équipement étant apte à communiquer avec le réseau de capteurs comme on l'a vu en étant déclaré comme « point de sortie» du réseau de capteurs ; il est donc possible d'acheminer les données issues du premier équipement audit second équipement via le réseau de capteurs, ce sans modification du premier et du second équipement.

Selon un mode de mise en œuvre particulier de l'invention, le routeur utilise un préfixe pour la génération de l'adresse IP du second équipement dans le réseau de capteurs. Dans cette configuration, selon ce mode de mise en œuvre, l'étape de génération visée ci-dessus est précédée d'une étape de réception du préfixe qui est utilisé par le nœud gestionnaire, et en ce que l'étape de génération utilise le préfixe reçu. De cette manière, le routeur et le nœud gestionnaire coopère ne se partageant le préfixe utilisé dans le réseau de capteurs considéré. Il suffit alors pour le routeur de créer une adresse à la base du préfixe et de vérifier ensuite sa disponibilité dans le réseau de capteurs.

D'une manière générale, lorsqu'une adresse est générée, celle-ci a une durée de vie. Plusieurs cas de figure sont envisageables.

Selon un mode de mise en œuvre particulier de l'invention, qui pourra être mis en œuvre alternativement ou cumulativement avec le précédent, l'adresse générée a une durée de vie infinie. Ce mode est utile lorsque le deuxième équipement peut être un équipement « fixe » non voué à être déplacé, ou à changer d'état électrique contrairement à des capteurs ; un changement d'état électrique pouvant être le passage d'un état prêt à l'emploi (ON) à état éteint (OFF), le passage d'un état prêt à l'emploi (ON) à l'état de veille, etc. ce mode évite au deuxième équipement de communiquer avec le nœud gestionnaire après que l'adresse du deuxième équipement ait été enregistrée dans le réseau de capteurs.

Il se peut que le préfixe utilisé par le nœud gestionnaire ait une durée de vie limitée dans le temps. Dans cette configuration, selon un autre mode de mise en œuvre particulier de l'invention, qui pourra être mis en œuvre alternativement ou cumulativement avec le précédent, la durée de vie de l'adresse générée est au plus égale à la durée de vie du préfixe. Cela évite de générer des adresses pour le second équipement qui seront incompatibles avec le réseau de capteurs. Il faut noter ici que si la durée du vie de l'adresse est inférieure à la durée de vie du préfixe, le deuxième équipement doit avertir le réseau de capteurs, en particulier le nœud gestionnaire, de ne plus router de messages après expiration de la durée de vie de l'adresse.

Indépendamment de la durée de vie fixée pour l'adresse, il se peut que le deuxième équipement ne soit pas accessible par exemple parce qu'il est déconnecté du réseau, ce de manière volontaire ou de manière intempestive. Dans cette configuration, lorsque cela se produit, selon encore un autre mode de mise en œuvre particulier de l'invention, qui pourra être mis en œuvre alternativement ou cumulativement avec les précédents, le routeur transmet un message spécifiant une durée de vie nulle à destination du nœud gestionnaire, ce de manière à supprimer le routage des paquets destinés au deuxième équipement. Encore une fois, ce mode évite de router des paquets via le réseau de capteur inutilement, ici dans le cas où le second équipement est inaccessible ; cela d'autant plus que l'autonomie des capteurs est souvent limitée dans le temps.

Selon un aspect matériel, l'invention a trait à un routeur tel que défini dans la revendication 6.

Selon un aspect matériel, l'invention a trait à un système informatique pour l'acheminement de données entre deux équipements de type IP, dits premier et second équipements, le second équipement étant apte à communiquer avec un nœud gestionnaire d'un réseau de capteurs ayant des adresses IP respectives générées par ledit nœud gestionnaire, le nœud ayant en outre une fonction d'acheminement des données dans le réseau de capteurs, caractérisé en ce qu'il comprend un routeur tel que défini ci-dessus.

Selon un autre aspect matériel, l'invention se rapporte à un programme d'ordinateur comprenant des instructions de code qui, lorsque le programme est exécuté par un processeur réalise les étapes du procédé tel que défini ci-dessus.

Un tel programme peut utiliser n'importe quel langage de programmation. Il peut être téléchargé depuis un réseau de communication et/ou enregistré sur un support lisible par ordinateur.

Bien entendu, chacun de ces équipements comporte des moyens logiciels tels que des instructions du programme informatique précité, ces instructions étant exécutées par des moyens physiques tels qu'au moins un processeur et une mémoire de travail.

L'invention sera mieux comprise à la lecture de la description qui suit, donnée à titre d'exemple et faite en référence aux dessins annexés sur lesquels :
La figure 1 représente un système informatique sur lequel est illustré un exemple de réalisation de l'invention.
La figure 2 est une vue schématique de la topologie des réseaux de capteurs selon l'état de la technique.
La figure 3 est une vue schématique des échanges de données entre les différents équipements selon un mode de réalisation.

### Description détaillée d'un exemple de réalisation illustrant l'invention

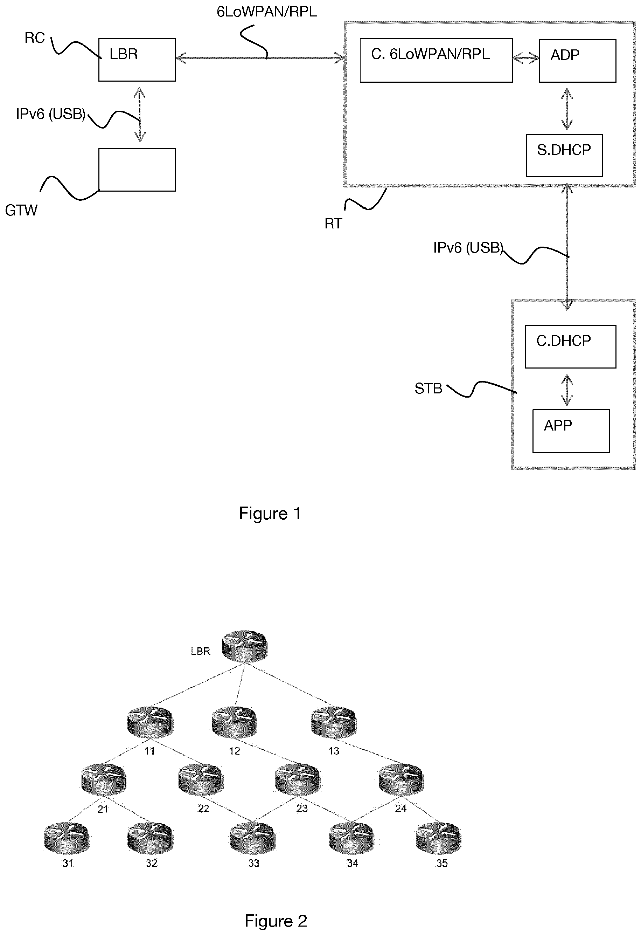

La figure 1 représente un système SYS comprenant un réseau domestique incluant un premier équipement illustré au moyen d'une passerelle domestique GTW et un deuxième équipement illustré au moyen d'un décodeur de télévision numérique STB.

Usuellement, dans un tel réseau, la passerelle GTW comporte une interface de type Ethernet permettant de dialoguer en mode filaire sur le réseau via un protocole de communication de type IP et une interface Wifi pour dialoguer sans fils selon ce même protocole IP.

Dans notre exemple, la passerelle GTW et le décodeur STB communique via une interface Wifi.

Le système inclut également un réseau de capteurs RC incluant un nœud LBR (de l'anglais Low power and lossy network Border Router, « routeur de bordure du réseau, de faible puissance et avec perte ») qui est dépositaire de la gestion du préfixe de l'adresse IPv6. De tels nœuds gèrent une table NCE (de l'anglais Neighbor Cache Entry, « entrée de table du cache listant les voisins ») où sont listées toutes les adresses du réseau de capteurs de type 6LoWPAN. Lors d'une sollicitation, si une adresse n'est pas dans le cache, elle est considérée comme valide et est enregistrée avec une valeur « durée de vie » LF. Nous verrons plus tard dans la description qu'une adresse générée par ce nœud aura une durée LF1.

Rappelons qu'un réseau de capteurs est aussi appelé par l'homme du métier LLN (Lo-Power and Link Network) ou LoWPAN (Low Wireless Personal Area Network))

Un réseau de capteurs se caractérise par un ensemble de nœuds (représentés sur la figure 2) chargés de récolter une donnée physique (température, pollution, détection de mouvement, mesures de consommation électrique,...). Par extension, ces nœuds jouent le rôle d'activateur capables de déclencher un événement (ouvrir une porte, allumer une lampe, gestion de l'énergie,...). Un bâtiment peut inclure plusieurs centaines de ces capteurs communicants en utilisant le protocole IPv6. Une grande partie de ces capteurs ne seront pas connectés au réseau électrique et seront alimentés uniquement par batteries. Le but est de garantir la plus grande autonomie possible à ces capteurs qui se trouvent généralement dans les endroits peu accessibles. A titre d'exemple, des capteurs placés sur des compteurs à eau devraient avoir une autonomie d'une dizaine d'années.

La présente invention introduit un équipement désigné par la suite par le terme « routeur » et référencé RT sur les figures. Ce dernier joue un rôle d'interface entre un lien IPv6 classique et un réseau basse consommation de type 6LoWPAN/RPL. Pour ce faire, le routeur RT inclut un serveur DHCP référence S.DHCP de type IPv6 et le décodeur est équipé d'un client DHCP référence C.DHCP de type IPv6. En conséquence, une communication client/serveur IPv6 est possible entre le décodeur STB et le routeur RT. Le décodeur inclut en outre une application APP, par exemple une application de type multimédia.

Le routeur RT inclut un client C. 6LoWPAN/RPL. Ce dernier permet la communication entre le routeur RT et les équipements du réseau de capteurs RC en l'occurrence le nœud gestionnaire LBR. Rappelons que RPL correspond au sigle de "IPv6 Routing Protocol for Low-Power and Lossy Networks".

Le routeur RT inclut en outre un module d'adaptation ADA. Le module d'adaptation a pour fonction la gestion de la communication avec le réseau de capteurs via le client C. 6LoWPAN/RPL et avec le décodeur STB via le serveur S.DHCP en fonction des messages reçus par le routeur RT. En outre, dans le cas où le client C.DHCP est de type IPv4, le module d'adaptation est aussi utilisé pour traduire l'adresse IPv4 en une adresse IPv6 compatible avec le réseau de capteurs.

La passerelle GTW est le point d'entrée du réseau de capteurs RC. Dans notre exemple, la communication entre la passerelle et le nœud gestionnaire LBR s'effectue via un lien IPv6 (USB par exemple).

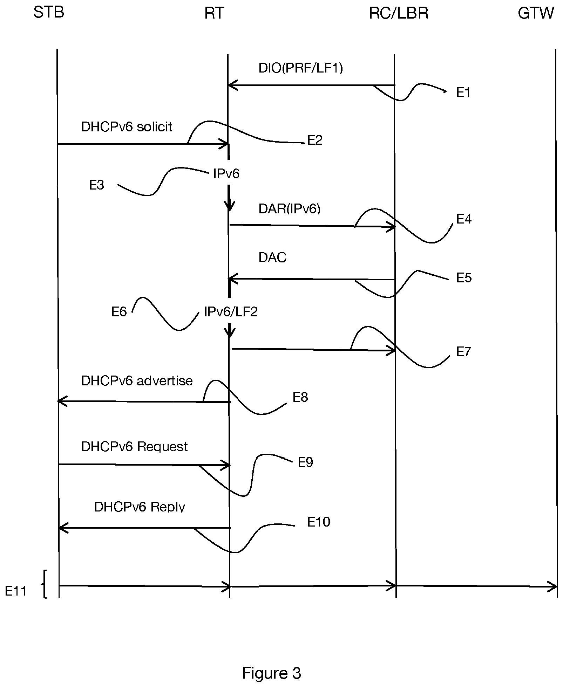

La figure 3 illustre les échanges de message entre les différents équipements du système SYS selon un mode de réalisation du procédé de l'invention. Dans ce mode, on considère qu''un utilisateur dispose chez lui d'une passerelle domestique et d'un décodeur TV numérique, ces deux équipements sont connectés en WiFi afin d'acheminer les flux TVs. L'utilisateur dispose aussi de capteurs (détecteur de fumée ou de présence, lampes, bracelets ...) qui communiquent entre eux en utilisant un réseau 6LoWPAN / RPL. De plus, la passerelle et le décodeur disposent aussi de deux clés USB qui leur permettent de rejoindre le réseau de capteurs. Dans notre exemple, le routeur RT objet de l'invention est installé dans une clé USB.

L'autre clé USB connectée à la passerelle permet de réaliser l'interconnexion entre la passerelle et le réseau de capteurs. L'interface USB étant la route par défaut pour les messages en provenance du réseau de capteurs et à destination de l'extérieur. Cette dernière clé correspond également à l'équipement LBR qui va diffuser, par un message DIO qui sera décrit plus tard en référence au mode de réalisation, le préfixe PRF utilisé dans le réseau de capteurs.

Lorsque l'utilisateur met son décodeur TV numérique en mode veille, celui-ci coupe sa carte WiFi afin de diminuer sa consommation. A ce moment, grâce à l'invention, le décodeur et la passerelle sont capables de maintenir leur connexion en utilisant le réseau de capteurs.

Sur le figure 3, les étapes de ce mode de réalisation sont référencées E1 à E11.

Lors d'une première étape E1, le nœud gestionnaire LBR transmet au routeur RT un message DIO incluant le préfixe PRF qu'il utilise pour la gestion des adresses dans le réseau de capteurs et la durée LF1 de vie de ce préfixe, dite première durée de vie. Par exemple, le nœud LBR fourni le préfixe des adresses IP qu'il utilise, par exemple 2a01:: sur 64 bits.

Lors d'une deuxième étape E2, le serveur S.DHCP (v4 ou v6) présent sur le routeur RT et le client C.DHCP présent sur le décodeur STB sont exécutés. Suite à l'exécution de client et du serveur DHCP, un message « DHCPv6 Solicit »est transmis par le décodeur STB au routeur RT.

Suite à la réception du message DHCP, lors d'une troisième étape E3, le serveur S.DHCP du routeur RT calcule une adresse IPv6 pour le décodeur STB à partir du préfixe PRF fourni par le nœud gestionnaire LBR, par exemple 2a01 ::2

Lors d'une quatrième étape E4, un test de vérification est effectué pour vérifier si l'adresse IPv6 est disponible ou pas dans le réseau de capteurs RC, cette adresse pouvant déjà être attribué à un capteur du réseau de capteurs. Pour cela, dans notre exemple, un message DAR (sigle de « Duplicate Address Request ») est transmis sur le réseau 6LoWPAN depuis le routeur RT vers le nœud gestionnaire LBR.

En référence à la norme RFC6557, une partie du message DAR peut s'écrire de la manière suivante
*Champ Type : 157*
*Code : 0*
*Status : 0*
*Registration Lifetime : LF2 (pour indiquer un lifetime)*
*EUI-64 : identifiant EUI-64 de l'interface*
*Registered address :* 2a01::2 (*adresse IPv6 à tester)*

Ensuite, lors d'une cinquième étape E5, un message DAC (sigle de « Duplicate Confirmation ») est transmis depuis le nœud gestionnaire LBR au routeur RT. Ce message DAC indique que l'adresse est disponible ou non.

En référence à la norme RFC6557, une partie du message DAR peut s'écrire de la manière suivante
*IPv6 src : adresse du LBR*
*IPv6 dest :* 2a01::2 (*adresse IPv6 à tester)*
*Champ Type : 158*
*Status : indique le statut de l'enregistrement*
*EUI-64 : identifiant EUI-64*

A ce stade, si l'adresse n'est pas disponible car déjà attribuée à un capteur, les mêmes étapes sont de nouveau exécutées avec une nouvelle adresse IPv6, respectant le préfixe utilisé par le nœud gestionnaire LBR, jusqu'à ce que l'adresse générée soit disponible dans le réseau de capteurs.

Si l'adresse est disponible, le procédé se poursuit de la façon suivante :
Lors d'une sixième étape E6, une durée de vie LF2 de l'adresse, dite deuxième durée de vie, est attribuée à l'adresse IPv6. Cette durée est par exemple fixée par le routeur RT.

Lors d'une septième étape E7, un message DAO (sigle de « Destination Advertisment Object ») présent dans RPL avec les entêtes « Target Prefix» et « Transit Information » contenant respectivement l'adresse IPv6 du décodeur et la deuxième durée de vie LF2" est transmis à destination du réseau de capteurs RC en particulier au module LBR pour que celui-ci ajoute le nouvel équipement dans son réseau de capteurs. Le nœud LBR stocke cette nouvelle adresse dans sa base.

Dans notre exemple, en référence à la norme RFC6557 Target option, le message DAO comprend notamment deux options, à savoir « target option » et « transit Information Option ».

Dans l'option « Target option », le champ « Target Prefix » est rempli avec l'adresse Ipv6 généré correspondant au décodeur du décodeur

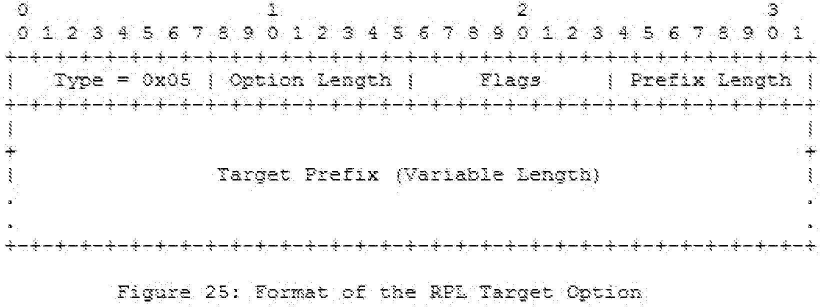

Dans l'option « Transit Information option »,le champ « Path Lifetime » est renseigné avec la durée de vie LF2.

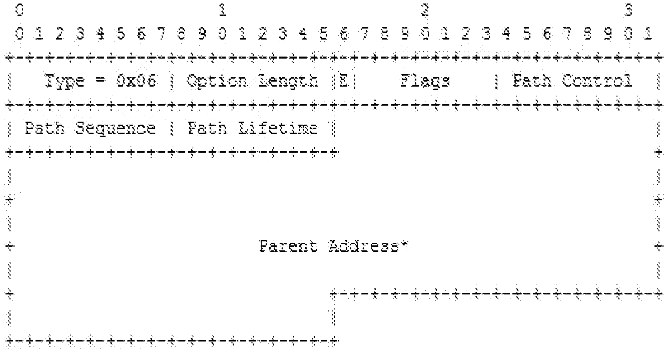

Lors d'une huitième étape E8, un message « DHCPv6 Advertise » est transmis par le serveur S.DHCP au client C.DHCP du décodeur STB pour confirmer sa présence dans le réseau de capteurs. Ensuite, lors d'une neuvième étape E9, le décodeur STB répond en envoyant un message « DHCPv6 Request » pour demander ses identifiants de connexion auquel le serveur répond, lors d'une dixième étape E10, par un message « DHCPv6 Reply » au décodeur STB contenant son adresse IPv6.

L'annexe jointe est un exemple de messages DHCPv6 utilisé dans la norme RFC6557.

A ce stade, le décodeur peut communiquer avec la passerelle GTW via le réseau de capteurs.

Lors de la réception d'un paquet émis par la passerelle GTW à destination du décodeur STB, le paquet en question est routé vars le décodeur STB via le réseau de capteurs RC ; plus précisément, la passerelle émet un paquet vers le réseau de capteurs via le lien IPv6 classique (USB dans notre cas) ; ensuite, le paquet passe dans le réseau de capteurs RC, et par le routeur RT ensuite. Le routeur RT transmet le paquet ensuite au décodeur STB via le lien IPv6 classique (USB dans notre exemple). Ces dernière étapes sont référencées E11 sur la figure 2.

De la même manière, le décodeur STB peut transmettre un paquet de données à la passerelle GTW. Le paquet en question est transmis au routeur RT, puis au réseau de capteurs, puis à la passerelle.

Le mode de réalisation décrit peut faire l'objet de variantes.

Selon une première variante, la deuxième durée de vie LF2 peut varier selon le mode de réalisation.

Premièrement, cette durée peut être infinie cela évite à la STB de devoir communiquer au routeur RT que l'adresse est périmée.

Deuxièmement, cette deuxième durée peut être égale à la dure de vie du préfixe (LF1=LF2). Cela évite de générer une adresse avec un préfixe qui n'est plus utilisé dans le réseau de capteurs.

Troisièmement, la deuxième durée de vie LF2 peut être inférieure à la première LF1 (LF2<LF1). Le routeur RT doit alors avertir le réseau de capteurs de ne plus router de message après la durée de vie LF2. Le nœud LBR met alors à jour sa base d'adresses.

Indépendamment de la durée de vie LF2 fixée, le décodeur peut ensuite ne pas être accessible pour diverses raisons par exemple parce qu'il est déconnecté ou parce qu'il ne fonctionne plus. Selon une seconde variante, de manière à gérer la déconnexion du décodeur, lorsque le routeur reçoit une requête DHCP Release issue du décodeur STB ou lorsque le routeur RT détecte la déconnexion USB du décodeur, le routeur RT transmet un message DAO (se référer à la norme RFC 6550) au réseau de capteurs RC avec
- un entête « Transit Information » spécifiant une durée de vie LF2 nulle sur le réseau de capteurs pour supprimer le routage des paquets destinés au décodeur STB ;
- un entête « Target » indiquant l'adresse de l'équipement, le décodeur STB dans notre exemple, pour lequel la route doit être supprimée.

Cela évite pour le routeur RT de transmettre des données à destination d'un équipement déconnecté. On évite ainsi de consommer des ressources inutilement dans le réseau de capteurs.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

### Annexe

Format du message DHCPv6 : 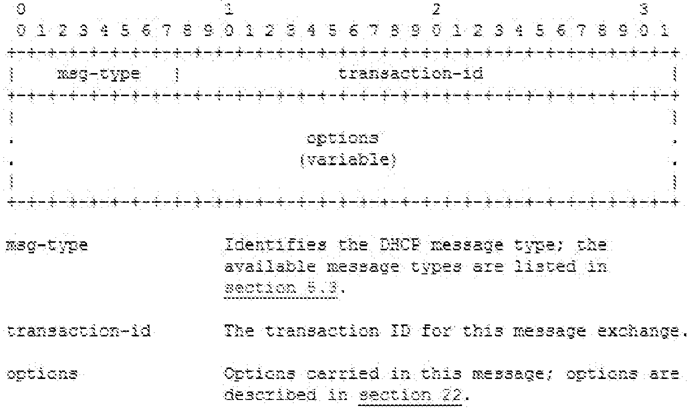 msg-type : SOLICIT=1, ADVERTISE=2, REQUEST=3, REPLY=7, RELEASE(8)

## Revendications

1. Procédé d'acheminement de données entre deux équipements de type IP (GTW,STB), dits premier et second équipements, adaptés pour communiquer entre eux via un réseau domestique, le premier équipement (GTW) étant en outre apte à communiquer avec un réseau de capteurs (RC) via un nœud gestionnaire (LBR), les capteurs ayant des adresses IP respectives dans ce réseau de capteurs générées par ledit nœud gestionnaire, le nœud (LBR) ayant en outre une fonction d'acheminement des données dans le réseau de capteurs, **caractérisé en ce qu'**il comprend les étapes suivantes dans un routeur (RT)
- Une étape (ET3) de génération d'une adresse pour le second équipement (STB),
- Une étape (ET5) de vérification de la disponibilité de l'adresse dans le réseau de capteurs auprès du nœud gestionnaire et
**caractérisé en ce qu'**il comprend l'étape suivante:
- Si l'adresse est disponible, une étape (E7) de demande d'ajout, auprès du nœud gestionnaire (LBR), du second équipement dans le réseau de capteurs, de manière à ce que le premier équipement puisse transmettre des données au deuxième équipement soit via le réseau domestique, soit via le réseau de capteur (RC).

2. Procédé selon la revendication 1, **caractérisé en ce que** le routeur (RT) utilise un préfixe pour la génération de l'adresse IP du second équipement (STB) dans le réseau de capteurs, **en ce que** l'étape de génération est précédée d'une étape de réception du préfixe qui est utilisé par le nœud gestionnaire (LBR), et **en ce que** l'étape de génération utilise le préfixe reçu.

3. Procédé selon la revendication 1, **caractérisé en ce que** l'adresse générée a une durée de vie infinie.

4. Procédé selon la revendication 1, **caractérisé en ce que** le préfixe à une durée de vie limitée dans le temps et **en ce que** la durée de vie de l'adresse générée est au plus égale à la durée de vie du préfixe.

5. Procédé selon la revendication 1, **caractérisé en ce que** si le deuxième équipement est inaccessible, le routeur transmet un message spécifiant une durée de vie nulle à destination du nœud gestionnaire (LBR).

6. Routeur (RT) adapté pour être installé dans un système informatique incluant au moins deux équipements de type IP (GTW, STB), dits premier et second équipements, adaptés pour communiquer entre eux via un réseau domestique, le premier équipement (GTW) étant en outre apte à communiquer avec un réseau de capteurs (RC) via un nœud gestionnaire (LBR), les capteurs ayant des adresses IP respectives générées par ledit nœud gestionnaire, le nœud (LBR) ayant en outre une fonction d'acheminement des données dans le réseau de capteurs, **caractérisé en ce qu'**il comprend
- Un module de génération d'une adresse pour le second équipement,
- Un module de vérification de la disponibilité de l'adresse dans le
réseau de capteurs auprès du nœud gestionnaire, et **caractérisé en ce qu'**il comprend l'étape de:
- Si l'adresse est disponible, un module de demande d'ajout, auprès du nœud gestionnaire (LBR), du second équipement dans le réseau de capteurs de manière à ce que le premier équipement puisse transmettre des données au deuxième équipement soit via le réseau domestique soit via le réseau de capteur (RC).

7. Système informatique pour l'acheminement de données entre deux équipements de type IP (GTW, STB), dits premier et second équipements, le second équipement étant adapté pour communiquer avec un nœud gestionnaire (LBR) d'un réseau de capteurs ayant des adresses IP respectives générées par ledit nœud gestionnaire, le nœud (LBR) ayant en outre une fonction d'acheminement des données dans le réseau de capteurs, **caractérisé en ce qu'**il comprend un routeur (RT) tel que défini dans la revendication 6.

8. Programme d'ordinateur comprenant des instructions de code qui, lorsque le programme est exécuté par un processeur réalise les étapes du procédé tel que défini dans la revendication 1.

## Patentansprüche

1. Verfahren zur Weiterleitung von Daten zwischen zwei Ausrüstungen des Typs IP (GTW, STB), erste und zweite Ausrüstungen genannt, die geeignet sind, über ein Heimnetzwerk miteinander zu kommunizieren, wobei die erste Ausrüstung (GTW) außerdem über einen Verwaltungsknoten (LBR) mit einem Netz von Sensoren (RC) kommunizieren kann, wobei die Sensoren vom Verwaltungsknoten generierte IP-Adressen in diesem Netz von Sensoren haben, wobei der Knoten (LBR) außerdem eine Funktion der Weiterleitung der Daten im Netz von Sensoren hat, **dadurch gekennzeichnet, dass** es die folgenden Schritte in einem Router (RT) enthält
- einen Schritt (ET3) der Generierung einer Adresse für die zweite Ausrüstung (STB),
- einen Schritt (ET5) der Überprüfung der Verfügbarkeit der Adresse im Netz von Sensoren beim Verwaltungsknoten, und
**dadurch gekennzeichnet, dass** es den folgenden Schritt enthält:
- wenn die Adresse verfügbar ist, einen Schritt (E7) der Anforderung der Hinzufügung, beim Verwaltungsknoten (LBR), der zweiten Ausrüstung in das Netz von Sensoren, damit die erste Ausrüstung entweder über das Heimnetzwerk oder über das Sensornetz (RC) Daten an die zweite Ausrüstung übertragen kann.

2. Verfahren nach Anspruch 1, **dadurch gekennzeichnet, dass** der Router (RT) ein Präfix für die Generierung der IP-Adresse der zweiten Ausrüstung (STB) im Netz von Sensoren verwendet, dass dem Generierungsschritt ein Schritt des Empfangs des Präfix vorausgeht, das vom Verwaltungsknoten (LBR) verwendet wird, und dass der Generierungsschritt das empfangene Präfix verwendet.

3. Verfahren nach Anspruch 1, **dadurch gekennzeichnet, dass** die generierte Adresse eine unendliche Lebensdauer hat.

4. Verfahren nach Anspruch 1, **dadurch gekennzeichnet, dass** das Präfix eine zeitlich begrenzte Lebensdauer hat, und dass die Lebensdauer der generierten Adresse höchstens gleich der Lebensdauer des Präfix ist.

5. Verfahren nach Anspruch 1, **dadurch gekennzeichnet, dass**, wenn die zweite Ausrüstung nicht zugänglich ist, der Router eine Nachricht überträgt, die dem Verwaltungsknoten (LBR) eine Lebensdauer Null angibt.

6. Router (RT), der geeignet ist, in ein EDV-System eingebaut zu werden, das mindestens zwei Ausrüstungen des Typs IP (GTW, STB) umfasst, erste und zweite Ausrüstungen genannt, die geeignet sind, miteinander über ein Heimnetzwerk zu kommunizieren, wobei die erste Ausrüstung (GTW) außerdem über einen Verwaltungsknoten (LBR) mit einem Netz von Sensoren (RC) kommunizieren kann, wobei die Sensoren vom Verwaltungsknoten generierte IP-Adressen haben, wobei der Knoten (LBR) außerdem eine Funktion der Weiterleitung der Daten im Netz von Sensoren hat,
**dadurch gekennzeichnet, dass** er enthält
- ein Modul zur Generierung einer Adresse für die zweite Ausrüstung,
- ein Modul zur Überprüfung der Verfügbarkeit der
Adresse im Netz von Sensoren beim Verwaltungsknoten, und **dadurch gekennzeichnet, dass** er den Schritt enthält:
- wenn die Adresse verfügbar ist, ein Modul der Hinzufügungsanforderung, beim Verwaltungsknoten (LBR), der zweiten Ausrüstung in das Netz von Sensoren, damit die erste Ausrüstung entweder über das Heimnetzwerk oder über das Sensornetz (RC) Daten an die zweite Ausrüstung übertragen kann.

7. EDV-System zur Weiterleitung von Daten zwischen zwei Ausrüstungen des Typs IP (GTW, STB), erste und zweite Ausrüstungen genannt, wobei die zweite Ausrüstung geeignet ist, mit einem Verwaltungsknoten (LBR) eines Netzes von Sensoren zu kommunizieren, die vom Verwaltungsknoten generierte IP-Adressen haben, wobei der Knoten (LBR) außerdem eine Funktion der Weiterleitung der Daten im Netz von Sensoren hat, **dadurch gekennzeichnet, dass** es einen Router (RT) wie im Anspruch 6 definiert enthält.

8. Computerprogramm, das Codeanweisungen enthält, die, wenn das Programm von einem Prozessor ausgeführt wird, die Schritte des Verfahrens wie in Anspruch 1 definiert durchführen.

## Claims

1. Method for routing data between two devices of IP type (GTW, STB), called first and second devices, which are suitable for communicating with one another via a home network, the first device (GTW) further being able to communicate with a network of sensors (RC) via a manager node (LBR), the sensors having respective IP addresses in this network of sensors which are generated by said manager node, the node (LBR) further having a function of routing data in the network of sensors, **characterized in that** it comprises the following steps in a router (RT)
- A step (ET3) of generating an address for the second device,
- A step (ET5) of checking the availability of the address in the network of sensors with the manager node and **characterized in that** it comprises the following step:
- If the address is available, a step (E7) of requesting the addition, from the manager node (LBR), of the second device to the network of sensors, so that the first device is able to transmit data to the second device either via the home network or via the sensor network (RC) .

2. Method according to Claim 1, **characterized in that** the router (RT) uses a prefix for the generation of the IP address of the second device (STB) in the network of sensors, **in that** the generation step is preceded by a step of receiving the prefix which is used by the manager node (LBR), and **in that** the generation step uses the received prefix.

3. Method according to Claim 1, **characterized in that** the address generated has an infinite lifetime.

4. Method according to Claim 1, **characterized in that** the prefix has a lifetime that is time-limited and **in that** the lifetime of the address generated is at most equal to the lifetime of the prefix.

5. Method according to Claim 1, **characterized in that** if the second device is inaccessible, the router transmits a message specifying a zero lifetime to the manager node (LBR).

6. Router (RT) suitable for being installed in a computer system including at least two devices of IP type (GTW, STB), called first and second devices, which are suitable for communicating with one another via a home network, the first device (GTW) further being able to communicate with a network of sensors (RC) via a manager node (LBR), the sensors having respective IP addresses that are generated by said manager node, the node (LBR) further having a function of routing data in the network of sensors, **characterized in that** it comprises
- A module for generating an address for the second device,
- A module for checking the availability of the address in the network of sensors with the manager node, and **characterized in that** it comprises the step of:
- If the address is available, a module for requesting the addition, from the manager node (LBR), of the second device to the network of sensors so that the first device is able to transmit data to the second device either via the home network or via the sensor network (RC).

7. Computer system for routing data between two devices of IP type (GTW, STB), called first and second devices, the second device being suitable for communicating with a manager node (LBR) of a network of sensors having respective IP addresses generated by said manager node, the node (LBR) also having a function of routing data in the network of sensors, **characterized in that** it comprises a router (RT) as defined in Claim 6.

8. Computer program comprising code instructions which, when the program is executed by a processor, performs the steps of the method as defined in Claim 1.
